# EUROPEAN PATENT SPECIFICATION

(11) **EP 1 546 593 B1**
(45) Date of publication and mention of the grant of the patent: **14.02.2007**
(21) Application number: 03730405.2
(22) Date of filing: 13.06.2003
(51) Int. Cl.: F16K 41/10

(54) **METHOD FOR PRODUCING A MULTILAYER SEAL AND MULTILAYER SEAL THEREBY OBTAINED**
VIELSCHICHTDICHTUNG UND VERFAHREN ZU DESSEN HERSTELLUNG
PROCEDE DE PRODUCTION D'UN JOINT MULTICOUCHES ET JOINT MULTICOUCHES AINSI OBTENU

(30) Priority: 14.06.2002 IT TO20020503
(43) Date of publication of application: 29.06.2005
(73) Proprietor: Varriale, Vincenzo, 20060 Cassina De Pecchi (Mi) (IT)
(72) Inventor: Varriale, Vincenzo, 20060 Cassina De Pecchi (Mi) (IT)
(74) Representative: Robba, Pierpaolo
(86) International application number: PCT/IB2003/002267
(87) International publication number: WO 2003/106874

(56) References cited:
- EP-A- 0 945 658
- GB-A- 995 929
- PATENT ABSTRACTS OF JAPAN vol. 009, no. 111 (M-379), 15 May 1985 (1985-05-15) & JP 59 232627 A (TOSHIBA KK), 27 December 1984 (1984-12-27) cited in the application

## Description

The present invention concerns a method for producing a multilayer seal.

More particularly, the invention concerns a method for making multilayer sealing members of different shapes, use of which is particularly suitable in applications where avoiding any fluid leak, even of minimum amount, is important, either for the fluid harmfulness or dangerousness, or for its high economic value.

Examples of sealing members with cylindrical geometry that can be manufactured by the method of the invention are multilayer bellows seals for valves (e.g. of the plug type), or bellows to be used as expansion joints or as flexible joints for power transmission.

Among sealing members with planar geometry that can be manufactured by said method, we can mention sealing membranes of partitions used on a fluid distribution line, e.g. of a corrosive fluid, in order to protect measuring instruments, such as the pressure gauges, from said fluid.

The above-described seals are preferably made of metal, even if different materials can be employed for particular applications.

Bellows seals for plug valves are known for instance from US-A 2,691,773.

In the particular case of bellows seals in plug valves, to improve performance of said seals while reducing the risk of leaks of the fluid contained in the valve, multilayer bellows seals have been employed in the past, so as to provide plural barriers between the fluid flowing inside the valve and the external environment.

Moreover, several solutions have been developed to exploit the gap created between the layers of the multilayer bellows seals to control possible leaks.

EP 945,658 discloses a multilayer bellows seal in which the volume created in the gap between the layers of the multilayer seal bellows is sealed and put in communication with a pressure detector signalling pressure changes, if any, due to leaks in the inner or the outer layers. To this end, the pressure inside the gap is previously increased or decreased relative to atmospheric pressure.

Usually, such gaps have thicknesses of the same order of magnitude, or of a greater order of magnitude, than the metal layers in the seal. Such gaps can be made, for instance, by alternating said layers with layers of a low-melting filling material and bringing then the whole to high temperature, so as to melt and remove the filling material, thereby leaving empty spaces, as disclosed in JP 59-232627.

Yet multilayer bellows seals of the type described above have a number of drawbacks.

For instance, the presence of gaps between the different layers implies a non-homogeneous effort distribution and an amplification of the vibrations (generated by the system itself or externally induced), with a consequent increase of the risk of breakage and a decrease in the operating life.

Moreover, the response time of the pressure detector to pressure changes inside the gap in the known seals is not always satisfactory, since such seals suffer from an inertia due to the relatively wide volume of the gap. Thus, timely diagnosing formation of cracks or porosity becomes difficult.

The high production cost depending on the gap formation is not the last drawback of said seals. For that reason, seals with a gap and a leak detector connected thereto are not widely diffused. In case of seals without detector, since a secure check of the layer integrity during operation is not possible, the seals have to be replaced based on an operating life duration obtained from empirical laboratory tests and statistical models. Thus, there is a cost increase on the one side, since replacement may concern seals that are still integral and capable of correctly operating, and a risk increase on the other side since, conversely, an early loss of integrity can occur in some seals, before the expiration of the useful life calculated in laboratory.

A further drawback of the known seals and of the methods employed for manufacturing same is the difficulty of manufacturing seals according to the prior art teaching, in which the layers are made of different materials meeting different requirements.

Thus, it is a main object of the present invention to provide a method of producing a multilayer seal capable of forming a retaining barrier that is effective and highly responsive to possible leaks of the treated fluid, in which the efficiency conditions can be easily and effectively monitored directly by the user during operation.

Another object of the present invention is to provide a method of producing a multilayer seal, which is compact, robust and has improved performance in terms of resistance to vibrations and fatigue.

A further object of the present invention is to provide a simple and cheap method of producing multilayer seals.

The above and other objects are achieved by the method of producing a multilayer seal according to the invention, and by a multilayer seal manufactured by said method, as claimed in the appended claims.

The method of the invention comprises forming channels on the surfaces of the faces that will be used as layers of the multilayer seal.

Once said faces have been shaped so as to create the superimposed layers of a multilayer seal, the method of the invention comprises bringing the pressure in the volume confined between said layers to a preset value, and then connecting such a volume to a system signalling pressure changes.

More particularly, by using the method of the invention, it is particularly advantageous that said pressure is brought to a value lower than the surrounding pressure, i.e. that a vacuum is created between the layers, so as to increase adhesion between said layers, thus improving the structural characteristics of the seal, more particularly the stress distribution, and increasing the operating life duration.

Yet, in case of application in production lines operating under vacuum conditions, in order to signal the formation of cracks or porosity in the seal and the resulting risk of loss of the seal integrity, the volume between the layers is preferably brought to a pressure above the surrounding pressure.

Moreover, pressurisation allows using a tracing fluid to fill the volume confined between the seal layers, so that a further means is available to signal the possible loss of integrity of the seal.

Generally speaking, the method of the invention does not aim at providing gaps between the seal layers; on the contrary, it aims at obtaining the adhesion between the different layers conferring improved structural characteristics to the seal.

The adhesion obtained between the layers allows handling such layers as a single, compact structure. Thus, the vibrations to which the seal is submitted will have lower frequency than when gaps are present between the different layers, with favourable consequences on the duration of the seal operating life.

Moreover, all layers will respond to stresses as an integral body and no problems related with the contrast between the elastic return of the outermost and the innermost layers will occur.

Advantageously, layer adhesion allows using non-homogeneous materials and metals, while still obtaining a compact structure.

The materials for the different layers will thus be chosen only depending upon their performance. Thus, corrosion-resistant metals, possibly with low mechanical qualities and with greatly reduced thicknesses, can be used for the innermost and outermost layers, whereas the intermediate layers could be made of materials with optimum elastic properties and tenacity, even if said materials are possibly less corrosion-resistant and less expensive.

In the final seal structure, the channels initially formed on the seal faces form the only interstices between the different layers and form a conducting system for the pressurised fluid or the vacuum within the multilayer seal.

Advantageously, a pressure detector can be connected to said channel net to signal a possible loss of integrity of the seal with consequent leak risk.

The depth of said channels depends on the density or viscosity of the fluids to be retained by the seal and of course it must increase as the fluid density and viscosity increase. Yet, in general, said depth is lower by at least one order of magnitude than the seal layer thicknesses.

Consequently, being the channels shallow, the volume where pressure is to be brought to a predetermined level (for instance, the volume from which air is to be drawn to create the vacuum) is a minimum volume. That feature affords considerable advantages over the known solutions where a gap is provided between the different seal layers. First, it is possible to have an economical saving when manufacturing the seals, since it sufficient to create a set of channels, even with coarse working techniques, in place of an actual chamber, and since the volume of fluid being drawn or pumped to bring pressure to a preset value is lower. Second, a system is obtained where the response time to possible leaks is far shorter.

Some exemplary embodiments of the invention will be disclosed in greater detail with reference to the accompanying drawings, in which:
- Figs. 1a to 1c show the seal faces according to three embodiments of the invention;
- Fig. 2 shows the step of obtaining a cylindrical layer;
- Fig. 3 is a cross-sectional view of a cylindrical seal;
- Fig. 4 is an enlarged view of a detail of the seal shown in Fig. 3;
- Fig. 5 is an enlarged view of a detail of the seal shown in Fig. 3, in which the seal is equipped with a pressure detector, during pressurisation or vacuum creation;
- Fig. 6 is a view corresponding to Fig. 5 and shows a variant embodiment of the cylindrical seal;
- Fig. 7 is an enlarged view of a detail of the seal shown in Fig. 3, in which the pressure detector is disconnected from the device for the pressurisation or vacuum creation;
- Fig. 8 is a cross-sectional view of the cylindrical seal applied to a plug valve;
- Fig. 9 shows a seal face according to a fourth embodiment of the invention;
- Fig. 10 is a cross-sectional view of the planar seal applied to a pressure gauge.

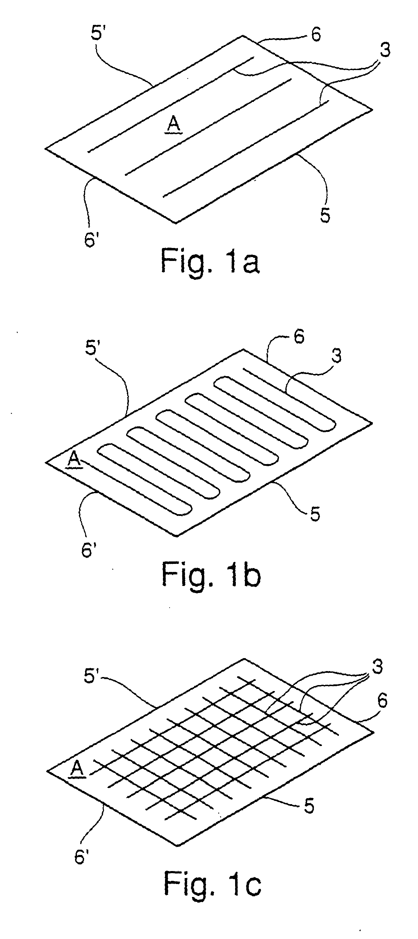

Referring to Figs. 1a to 1c, the method according to the invention for producing a multilayer bellows seal includes a step of preparing a set of substantially rectangular and preferably planar metal sheets A on which at least one channel 3 is formed. For instance said channels 3 may be substantially parallel to two sides of metal sheet A, as shown in fig. 1a, or they may form a serpentine, as shown in fig. 1b, or yet they may form a grid, as shown in fig. 1c.

Said channels 3 are formed on at least one of the faces of metal sheet A and they may be obtained by different working techniques, depending on the material of sheet A: for instance, mechanical deformation, removal by means of a tool, removal by means of a laser, chemical corrosion, deposition of material on the whole of the metal sheet face except in correspondence of the desired channels, etc., can be used As an alternative to forming channels 3, metal spacers (e. g., thin tubes or a grid) could be applied to metal sheet A.

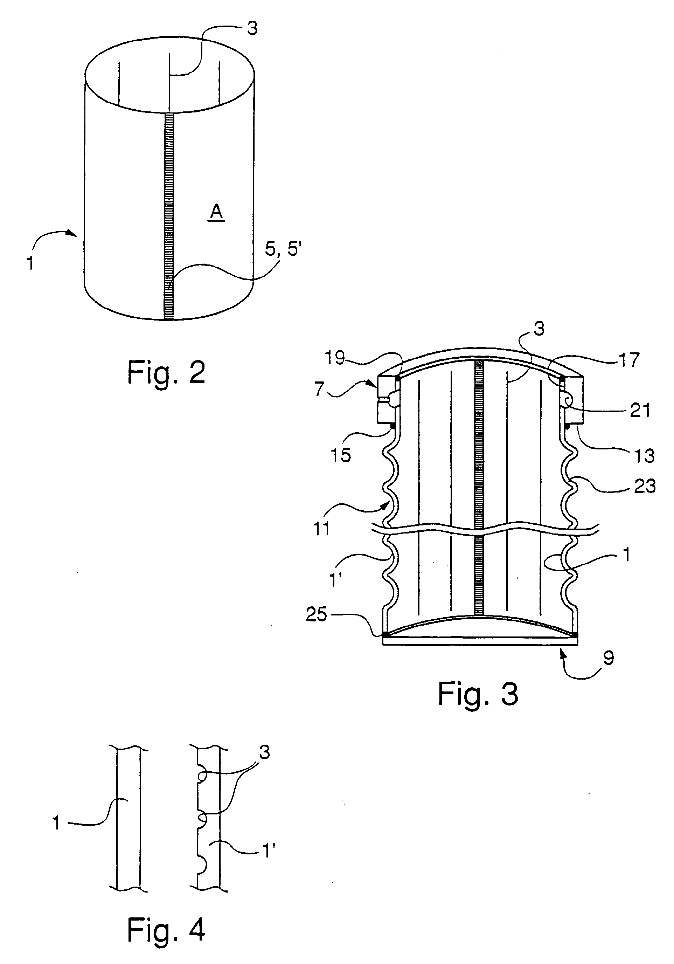

Advantageously, given the working simplicity, the cross section of channels 3 can be chosen depending on the specific user's requirements: e.g. the cross section may be half-circular, as shown in Fig. 4, or rectangular or triangular.

Fig. 2 shows the subsequent step of the method according to the invention applied to this first embodiment: here metal sheet A, after having been curved so as to form a hollow cylindrical body 1 and to cause the two major parallel sides to fit together, is welded along edges 5, 5'.

As clearly shown in Fig. 2, channels 3, in the embodiment shown, lie on the inner face of said cylindrical body 1.

In a subsequent step of the method according to the invention, a pair of metal cylindrical bodies 1, 1', which have been preferably obtained by the previous steps and at least one of which is provided with channels on one face, are placed inside one another, so that the face with the channels lies between the two cylinders, as clearly shown in Fig. 4.

To this end, the diameter of inner cylindrical body 1 will be slightly smaller than that of outer cylindrical body 1', and yet it will be such as to ensure the perfect adhesion of both cylindrical bodies by minimising volume 23 (here enlarged for sake of clarity of the description) provided between the faces of cylindrical bodies 1, 1'.

Otherwise stated, the only interstices existing between said cylindrical bodies substantially consist of channels 3 initially formed on metal sheets A.

Said channels 3, as it will be disclosed in more detail below, can be used as a conducting system, of which the overall volume will advantageously be extremely small.

Subsequently, multilayer structure 11 thus obtained will be submitted to pot die forming to obtain a corrugated bellows structure, as shown in Fig. 3.

As an alternative to pot die forming, especially for big bellows, a roll forming process could be advantageously employed to obtain the corrugated profile in multilayer structure 11.

Once cylindrical bodies 1, 1' have been deformed, they are sealed at their edges 6, 6' by means of a first ring insert 7 and a second disc insert 9, respectively, to which said cylindrical bodies 1, 1' are welded.

Thus, volume 23 defined between the faces of said cylindrical bodies 1, 1' is hermetically isolated from the surrounding environment.

Still referring to Fig. 3, upper edges 6 of outer and inner cylindrical bodies 1' and 1 are welded on lower edge 13 of ring 7, along line 15, and on inner edge 17 of ring 7, along line 19, respectively. To this end inner cylindrical body 1 will be slightly longer than outer body 1'.

Ring 7 has, on its inner surface, an annular groove 21, allowing channels 3 to communicate with a leak detecting system.

Thus, it is necessary that all channels 3 are connected to said annular groove 21, either directly or indirectly through other channels 3. For instance, in case of a channel pattern as shown in Fig. 1a, all channels 3 are directly to communicate with groove 21; on the contrary, in case of a channel system as shown in Fig. 1c, it is sufficient that even a single channel directly ends into said groove 21.

Advantageously, in this manner it is possible to avoid that the hermetic contact between the faces of both cylindrical bodies, possibly occurring at one or more locations thereof, hinders the free flow of the fluid entered into the volume confined between the layers because of a leak.

Still referring to Fig. 3, lower edges 6' of outer and inner cylindrical bodies 1' and 1 are welded to cover 9 along line 25.

It is clear that, if the seal according to the invention is used as an expansion joint inside which the fluid to be retained can flow whatever the application, it is sufficient to carry out simple modifications that are within the reach of any person skilled in the art: for instance, a pair of rings 7 could be provided to close both seal ends.

In case two rings 7 are provided, one at each seal end, both rings 7 could be provided with an annular groove 21. In such case, part of channels 3 could communicate with groove 21 of one ring 7, while the remaining channels communicate with the other ring 7.

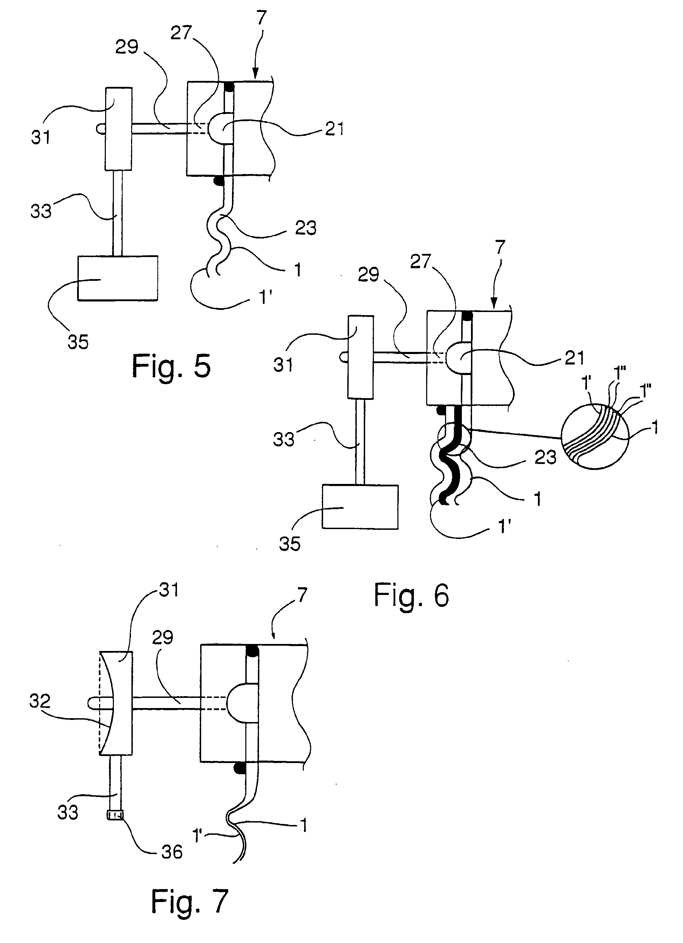

Turning now to Fig. 5, said ring 7 is further provided, in correspondence with groove 21, with a radial bore 27 putting said groove 21 in communication with a capillary 29 connected to a pressure detector 31 consisting of a deformable membrane capsule.

If it is desired to bring the volume confined between said cylinders 1, 1' to a pressure lower than the external pressure, said detector 31 is further connected, through a suitable duct 33, to a vacuum pump 35 allowing creating the desired vacuum conditions inside volume 23 confined between inner and outer cylindrical bodies 1 and 1'.

Thanks to vacuum pump 35 connected to duct 33 of detector 31, air present between the faces of cylindrical bodies is exhausted through capillary 29 until vacuum is created within said volume 23.

Consequently, adhesion between the faces of cylindrical bodies 1, 1' is advantageously made still stronger.

If on the contrary it is desired to bring the volume confined between said cylinders 1, 1' to a pressure higher than the surrounding pressure, said detector 31 is connected, through duct 33, to a pump 35 allowing pumping a fluid into said volume 23 between inner and outer cylindrical bodies 1 and 1', until attaining the desired pressure.

It is to be appreciated that, even in this case, notwithstanding volume 33 is pressurised, the adhesion between the different layers of multilayer structure 11 is maintained. Indeed the effect of the pressure, which would tend to separate said layers, is contrasted by the mechanical interference between the layers, related with the minimum diameter difference of cylindrical bodies 1, 1'.

It is also to be appreciated that, thanks to the great sensitivity to leaks of the multilayer structure made by the method of the invention, it is enough to bring the pressure inside volume 23 to a value only slightly exceeding the pressure in the surrounding environment.

Similarly, even when vacuum condition are created between the layers, a not too low pressure value, for instance half the value of the pressure in the surrounding environment, is sufficient to obtain an effective and timely response in case of leaks.

Fig. 6 shows a variant embodiment of the multilayer seal shown in Fig. 5, where said multilayer seal includes free layers.

One or more cylindrical bodies 1" of intermediate diameters, each having channels on at least one face, are arranged between innermost cylindrical body 1 and outermost cylindrical body 1'.

It is important to note that, thanks to the strong adhesion between said cylindrical bodies 1, 1', 1", it is not necessary to fasten intermediate cylindrical bodies 1" to end ring 7, since they are kept in the correct position by the mutual adhesion force with one another and with extreme cylindrical bodies 1, 1' that are welded to end ring 7.

That feature is particularly advantageous when different materials are used for the different layers of the bellows seal. Indeed, extreme cylindrical bodies 1, 1' may be made of a valuable, highly corrosion-resistant material, whereas intermediate cylindrical bodies 1" may be made of less valuable materials, simply having good elastic characteristics and tenacity, without need to cope with the problem of welding together materials of different nature.

Fig. 7 shows the bellows seal when vacuum has been created in the volume between the layers. Depression detector 31 is disconnected from vacuum pump 35 and membrane 32 is flexed inwards because of the vacuum created between cylindrical bodies 1, 1', that is between the layers of the multilayer bellows seal.

Duct 33 is hermetically sealed by a suitable seal 36 and vacuum pump 35 is removed.

Any displacement of membrane 32 from the inwards flexed position to the outwards flexed position would be a signal of loss of integrity of the multilayer bellows seal.

Clearly, in case the volume between the layers is pressurised, in normal operating conditions membrane 32 of pressure detector 31 is flexed outwards, and any loss of integrity of the bellows seal would be indicated by membrane 32 passing from the outwards flexed to the inwards flexed position.

Advantageously, the overall volume of channels 3, which substantially form the only interstices between the seal layers, is extremely small and consequently the seal manufactured by the method described above is extremely responsive to fluid leaks, even of minimum amount.

Otherwise stated, the response of detector 31 will be very fast, contrary to the present seals that, as known, suffer from inertia in the response because of the time required to cause a detectable pressure change throughout the volume of the whole gap.

Moreover said channels 3, while they do not reduce the mechanical resistance of the seal, form a network of predetermined breaking points which make checks on the seal integrity easier.

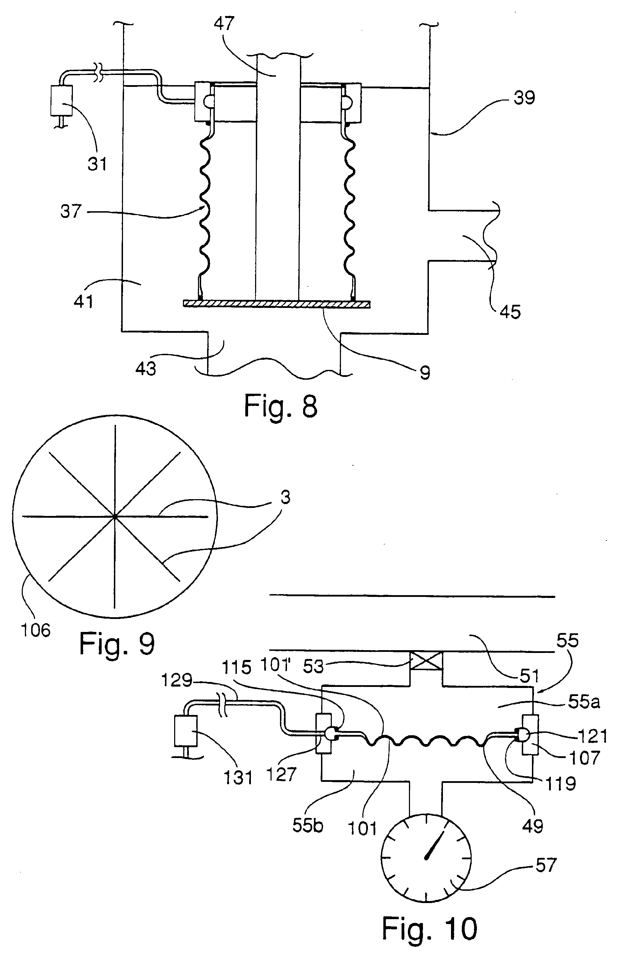

Fig. 8 shows an exemplary application of a bellows seal 37 manufactured by the method of the invention to a plug valve 39.

The fluid intercepted by valve 39 passes through chamber 41 containing bellows seal 37 by entering through inlet duct 43 and going out through outlet duct 45. Control stem 47, by acting onto cover 39, controls opening and closing of inlet duct 43.

When the fluid flows through chamber 41, the end portion of said control stem 33, connected to said cover 9, is protected by bellows seal 37, which prevents fluid from coming into contact with the control units of the plug valve.

Bellows seal 27 is connected to pressure detector 31, which signals a loss of integrity of the seal, if any, and the consequent risk of fluid penetration into the seal.

Figs. 9 and 10 refer to another embodiment of the invention, concerning manufacturing of a planar seal.

Fig. 9 shows the starting step of the method of the invention, concerning channel formation.

Here, the method of the invention comprises preparing a set (usually a pair) of substantially disc-shaped and preferably planar metal sheets B, on which at least one channel 3 is formed.

As to the manner of forming said channels 3 and to their geometries, the considerations made above in case of applications to cylindrical seals are still valid.

In a subsequent step of the method of the invention, at least two metal sheets B, which preferably have been obtained according to the previous steps and of which at least one has channels 3 on one face, are superimposed to form a multilayer structure, so that the face with the channels lies between the two sheets and said sheets are in close mutual contact.

If the application in which the planar seal will be used requires so, the seal can be submitted to pot die forming or similar working to impart it a profile with concentric corrugations.

Subsequently, seal layers 101, 101' are welded at their circumferential edges to a ring 107, along lines 115 and 119. Said ring 107 has an annular groove 121, arranged to put channels 3 in communication with one another, and a radial bore 127 to put the volume confined between the layers in communication with a pressure detector 131 through a capillary 129.

Once layers 101, 101' have been welded to sealing ring 107 and the volume confined therebetween has been hermetically sealed, the last method step is connecting pressure detector 131 with a pump and bringing the pressure of the volume confined between the layers to a preset value.

Fig. 10 shows the application of a multilayer planar seal thus obtained as a membrane 49 of a partition associated with a pressure gauge 57.

Said partitions are used, for instance, along fluid distribution lines to protect measuring instruments, such as the pressure gauges, when the fluids flowing along said lines have such chemical-physical properties that they could damage said measuring instruments.

Referring to Fig. 10, pressure gauge 57 measures the pressure of the fluid flowing in pipe 51. A chamber 55, containing a multilayer membrane 49, is connected between said pressure gauge 57 and said pipe 51. Said membrane 49 divides said chamber 55 into a portion 55a, into which the fluid flowing in the pipe 51 penetrates when valve 53 is opened, and a portion 55b, containing the measurement fluid used by pressure gauge 57.

The pressure in the volume confined between the layers of multilayer membrane 49 is brought to a preset value and said volume is connected to a pressure detector 31.

Also in this case, due to the extremely small volume confined between the layers of membrane 49, any loss of integrity of the multilayer membrane is effectively signalled, so as to reduce the risk of leaks and of consequent damages to pressure gauge 57.

## Claims

1. A method of producing a multilayer seal, comprising the steps of:
- preparing a plurality of substantially planar sheets (A, B);
- obtaining at least one channel (3) on at least one face of at least one of said sheets (A);
- placing at least a first and a second of said sheets (A, B) into close mutual contact so that said at least one face with said channel (3) in said first sheet faces said second sheet;
- sealing the edges (5, 5', 6, 6', 106) of said first and second sheets so that the volume (23) confined between said first and second sheets is hermetically isolated from the outside environment ;
- bringing said hermetically isolated volume (23) to a preset pressure value.

2. A method as claimed in claim 1, wherein said volume (23) is connected with a pressure detector (31, 131).

3. A method as claimed in claim 1, wherein a plurality of channels (3), arranged parallel to one another or in serpentine or in a grid or radially, are obtained on at least one face of at least one of said sheets (A).

4. A method as claimed in claim 1, wherein said sheets (A) forming the layers (1, 1') of the multilayer seal are substantially rectangular metal sheets.

5. A method as claimed in any preceding claim, wherein, after attainment of said channels (3), said sheets are submitted to a shaping step to obtain corresponding hollow cylindrical bodies (1, 1'), and wherein said sheets are superimposed by placing the obtained cylinders (1, 1') inside one another.

6. A method as claimed in claim 5, wherein said shaping step is obtained by means of a curving process followed by welding along two contiguous edges (5, 5', 6, 6').

7. A method as claimed in claim 5 or 6, wherein after said shaping, said cylinders (1, 1') are submitted to a deformation step to obtain a corrugated profile.

8. A method as claimed in claim 6, wherein said edges (5, 5', 6, 6') are sealed by welding through the interposition of a corresponding first and second insert (7, 9).

9. A method as claimed in claim 1, wherein said sheets forming the layers (1, 1') of the multilayer seal are substantially disc-shaped metal sheets (B).

10. A method as claimed in claim 9, wherein said discs (101, 101') are joined together along their circumferential edges (106) by welding through the interposition of a corresponding insert (127).

11. A method as claimed in claim 9, wherein after attainment of said channels (3) said discs (101, 101') are submitted to a deformation step to obtain a corrugated profile.

12. A method as claimed in claim 9, wherein said deformation step is obtained through a pot die forming or roll forming process.

13. A method as claimed in any preceding claim, wherein said channels (3) are obtained through mechanical deformation, laser technology, chemical corrosion, deposition of material or application of spacers onto the surface of said sheet.

14. A method as claimed in any preceding claim, wherein said channels have half-circular, rectangular or triangular cross-sectional shapes.

15. A method as claimed in any preceding claim, wherein said volume (23) is brought to a pressure above/below the external pressure by means of a compression/suction device (35).

16. A multilayer seal comprising at least a first and a second superimposed layers, in close mutual contact and sealed along the edges (5, 5', 6, 6', 106) so as to define between said layers (1, 1', 101, 101') a corresponding volume (23), which is hermetically isolated from the surrounding environment and in which the pressure is set to a preset value, **characterised in that** at least one face of said layers (1, 1', 101, 101') facing said volume (23) is provided with at least one channel (3).

17. A seal as claimed in claim 16, wherein said seal comprises a pressure detector (31, 131) connected with said volume (23).

18. A seal as claimed in claim 16, wherein a plurality of channels (3), arranged parallel to each other or in serpentine or in a grid or radially, are obtained on at least one face of at least one of said layers (A).

19. A seal as claimed in claim 16, wherein said layers are hollow cylindrical bodies (1, 1') of sheet metal.

20. A seal as claimed in claim 19, wherein said hollow cylindrical bodies (1, 1') are sealed along their edges (5, 5', 6, 6') by welding through the interposition of a corresponding first and second insert (7, 9).

21. A seal as claimed in claim 20, wherein said first insert is a metal ring (7), said inner cylinder (1, 1') and said outer cylinder (1, 1') being welded to the inner wall and to the lower edge of said metal ring (7), respectively.

22. A seal as claimed in claim 20, wherein said second insert is a metal cover (9), said inner cylinder (1, 1') and said outer cylinder (1, 1') being welded to the side edge of said metal cover (9).

23. A seal as claimed in claim 16, wherein said layers are disc-shaped members (101, 101') of sheet metal.

24. A seal as claimed in claim 23, wherein said discs (101, 101') are sealed along their edges by welding through the interposition of a corresponding ring-shaped metal insert (7, 9).

25. A seal as claimed in claim 21 or 24, wherein said ring (7, 107) has, on its inner wall, an annular groove (21, 121) communicating with said at least one channel (3).

26. A seal as claimed in claim 25, wherein said annular groove (7, 107) communicates with the outside through a radial bore (27, 127) in said ring (7, 107).

27. A seal as claimed in claim 26, wherein said radial bore (27, 127) is connected, outside said ring (7, 107), with a pressure detector (31, 131) through a capillary (29, 129).

28. A seal as claimed in any of claims 16 to 27, wherein said volume (23) is brought to a pressure above/below the external pressure.

29. A seal as claimed in any of claims 16 to 28, wherein at least one free layer (1") is provided in said volume (23).

30. A valve for fluids, **characterised in that** it includes a multilayer seal as claimed in any of claims 16 to 22 or 25 to 29.

## Patentansprüche

1. Verfahren zur Herstellung einer Vielschichtdichtung mit folgenden Operationen:
- Bereitstellung einer Vielzahl von im Wesentlichen planen Platten (A, B);
- Erstellen von mindestens einem Kanal (3) auf wenigstens einer Seite von mindestens einer der Platten (A);
- Positionierung von mindestens einer ersten und zweiten jener Platten (A, B) in engem gegenseitigem Kontakt, so dass zumindest eine Seite mit dem Kanal (3) in jener ersten Platte jener zweiten Platte gegenübersteht;
- Abdichtung der Ränder (5, 5', 6, 6', 106) jener ersten und zweiten Platten, so dass das zwischen den ersten und zweiten Platten eingeschlossene Volumen (23) von der äußeren Umgebung hermetisch abgeschlossen ist;
- Aufbringung eines voreingestellten Drucks auf das hermetisch eingeschlossene Volumen (23).

2. Verfahren nach Anspruch 1, wobei das Volumen (23) mit einem Druckgeber (31, 131) verbunden ist.

3. Verfahren nach Anspruch 1, wobei eine Vielzahl von parallel zueinander oder in Serpentinen oder netzartig oder radial angeordneten Kanälen (3) auf wenigstens einer Seite von mindestens einer der Platten (A) erstellt werden.

4. Verfahren nach Anspruch 1, wobei jene, die Schichten (1, 1') der Vielschichtdichtung bildenden Platten (A), im Wesentlichen rechteckige Blechzuschnitte sind.

5. Verfahren nach einem der vorhergehenden Ansprüche, wobei nach dem Einbringen der Kanäle (3) jene Platten einer Formgebungsoperation unterworfen werden, um entsprechende zylindrische Hohlkörper (1, 1') zu erstellen und wobei die Platten durch Platzierung der erstellten Zylinder (1, 1') ineinander einander überlagert werden.

6. Verfahren nach Anspruch 5, wobei jene Formgebungsoperation mittels eines Biegeverfahrens mit anschließendem Schweißen entlang der beiden zusammenhängenden Ränder (5, 5', 6, 6') verwirklicht wird.

7. Verfahren nach Anspruch 5 oder 6, wobei nach jener Formgebung die Zylinder (1, 1') einer Verformungsoperation unterworfen werden, um ein gewelltes Profil zu erhalten.

8. Verfahren nach Anspruch 5, wobei diese Ränder (5, 5', 6, 6') durch Vermittlung eines entsprechenden ersten und zweiten Einsatzes (7, 9) dicht verschweißt werden.

9. Verfahren nach Anspruch 1, wobei die die Schichten (1, 1') bildenden Platten der Vielschichtdichtung im Wesentlichen scheibenförmige Metallplatten (B) sind.

10. Verfahren nach Anspruch 9, wobei jene Scheiben (101, 101') entlang des Umfangs ihrer Ränder (106) unter Vermittlung eines entsprechenden Einsatzes (127) durch Schweißen zusammengefügt werden.

11. Verfahren nach Anspruch 9, wobei nach dem Einbringen der Kanäle (3) jene Scheiben (101, 101') einer Verformungsoperation zur Erstellung eines gewellten Profils unterworfen werden.

12. Verfahren nach Anspruch 9, wobei jene Verformungsoperation durch ein Gesenkformungs- oder Profilwalzverfahren verwirklicht wird.

13. Verfahren nach einem der vorhergehenden Ansprüche, wobei jene Kanäle (3) durch mechanische Deformation, Lasertechnologie, chemisches Ätzen, Materialablagerung oder Einsatz von Distanzstücken auf der Plattenoberfläche zustande kommen.

14. Verfahren nach einem der vorhergehenden Ansprüche, wobei jene Kanäle halbkreisförmige, rechteckige oder dreieckige Querschnittsformen aufweisen.

15. Verfahren nach einem der vorhergehenden Ansprüche, wobei das Volumen (23) durch eine Kompressions- bzw. Saugeinrichtung (35) auf einen Druck über bzw. unter dem Umgebungsdruck gebracht wird.

16. Vielschichtdichtung, die mindestens erste und zweite überlagerte Schichten in engem gegenseitigen Kontakt aufweist, die entlang den Rändern (5, 5', 6, 6', 106) abgedichtet sind und so zwischen den Schichten (1, 1', 101, 101') ein entsprechendes Volumen (23) bilden, das von der umgebenden Umwelt hermetisch abgeschlossen ist und in dem der Druck auf einen vorgegebenen Wert eingestellt wird,
**dadurch gekennzeichnet, dass** mindestens eine der Seiten der Schichten (1, 1', 101, 101') zum Volumen (23) hin mit mindestens einem Kanal (3) versehen ist.

17. Dichtung nach Anspruch 16, wobei diese einen mit dem Volumen (23) verbundenen Druckaufnehmer (31, 131) aufweist.

18. Dichtung nach Anspruch 16, wobei eine Vielzahl von parallel zueinander oder in Serpentinen oder netzartig oder radial angeordneten Kanälen (3) auf wenigstens einer Seite von wenigstens einer der Schichten (A) erstellt werden.

19. Dichtung nach Anspruch 16, wobei jene Schichten hohlzylindrische Körper (1, 1') aus Blech sind.

20. Dichtung nach Anspruch 19, wobei die hohlzylindrischen Körper (1, 1') durch Vermittlung eines entsprechenden ersten und zweiten Einsatzes (7, 9) längs ihrer Ränder (5, 5', 6, 6') dicht verschweißt werden.

21. Dichtung nach Anspruch 20, wobei jener erste Einsatz eine Metallring (7) ist und der innere Zylinder (1, 1') und äußere Zylinder (1, 1') jeweils mit der Innenwandung und dem unteren Rand des Metallrings (7) verschweißt werden.

22. Dichtung nach Anspruch 20, wobei der zweite Einsatz ein Metalldeckel (9) ist, und der innere Zylinder (1, 1') und der äußere Zylinder (1, 1') mit der Seitenkante des Metalldeckels (9) verschweißt werden.

23. Dichtung nach Anspruch 16, wobei die Schichten scheibenförmige Elemente (101, 101') aus Blech sind.

24. Dichtung nach Anspruch 23, wobei die Scheiben (101, 101') entlang ihrer Ränder unter Vermittlung eines ringförmigen Metalleinsatzes (7, 9) dicht verschweißt werden.

25. Dichtung nach Anspruch 21 oder 24, wobei der Ring (7, 107) an seiner Innenwandung einen ringförmigen Einstich (21, 121) aufweist, der mit mindestens einem Kanal (3) in Verbindung steht.

26. Dichtung nach Anspruch 25, wobei der ringförmige Einstich (7, 107) mit der Außenseite über eine Radialbohrung (27, 127) im Ring (7, 107) in Verbindung steht.

27. Dichtung nach Anspruch 26, wobei die Radialbohrung (27, 127) au-ßerhalb des Rings (7, 107) über eine Kapillare (29, 129) mit einem Druckaufnehmer (31, 131) verbunden ist.

28. Dichtung nach einem der Ansprüche 16 bis 27, wobei das Volumen (23) auf einen Druck oberhalb/unterhalb des Umgebungsdrucks gebracht wird.

29. Dichtung nach einem der Ansprüche 16 bis 28, wobei mindestens eine freie Schicht (1 ") in jenem Volumen (23) vorgesehen ist.

30. Ventil für Fluide, **dadurch gekennzeichnet, dass** es eine Vielschichtdichtung nach einem der Ansprüche 16 bis 22 oder 25 bis 29 enthält.

## Revendications

1. Procédé de production d'un joint multicouches, comprenant les étapes consistant à :
- préparer une pluralité de tôles essentiellement planes (A, B) ;
- obtenir au moins un canal (3) sur au moins une face d'au moins l'une desdites tôles (A) ;
- placer au moins une première et une seconde desdites tôles (A, B) en contact mutuel étroit de sorte que ladite (lesdites) face (s) dotée (s) dudit canal (3) dans ladite première tôle soit en face de ladite seconde tôle ;
- fermer hermétiquement les bords (5, 5', 6, 6', 106) desdites première et seconde tôles de façon que le volume (23) confiné entre lesdites première et seconde tôles soit hermétiquement isolé de l'environnement extérieur ;
- amener ledit volume isolé hermétiquement (23) à une valeur de pression préétablie.

2. Procédé selon la revendication 1, dans lequel ledit volume (23) est connecté à un détecteur de pression (31, 131).

3. Procédé selon la revendication 1, dans lequel une pluralité de canaux (3), disposés parallèlement l'un à l'autre ou suivant une relation en serpentin, en grille ou disposés radialement, est obtenue sur au moins une face d'au moins l'une desdites tôles (A).

4. Procédé selon la revendication 1, dans lequel lesdites tôles (A) formant les couches (1, 1') du joint multicouches sont essentiellement des tôles métalliques rectangulaires.

5. Procédé selon l'une quelconque des revendications précédentes, dans lequel après obtention desdits canaux (3), lesdites tôles sont soumises à une étape de configuration pour obtenir des corps cylindriques creux correspondants (1, 1'), et dans lequel lesdites tôles sont superposées en plaçant les cylindres obtenus (1, 1') l'un à l'intérieur de l'autre.

6. Procédé selon la revendication 5, dans lequel ladite étape de configuration est obtenue au moyen d'un processus d'incurvation suivi d'une soudure le long de deux bords contigus (5, 5', 6, 6').

7. Procédé selon la revendication 5 ou 6, dans lequel après ladite configuration, lesdits cylindres (1, 1') sont soumis à une étape de déformation pour obtenir un profil ondulé.

8. Procédé selon la revendication 6, dans lequel lesdits bords (5, 5', 6, 6') sont fermés hermétiquement par soudure par l'intermédiaire de l'interposition d'une première et d'une seconde pièces d'insertion correspondantes (7, 9).

9. Procédé selon la revendication 1, dans lequel lesdites tôles constituant les couches (1, 1') du joint multicouches sont des tôles métalliques configurées essentiellement en forme de disque (B).

10. Procédé selon la revendication 9, dans lequel lesdits disques (101, 101') sont liés ensemble le long de leurs bordures circonférentielles (106) par soudure par l'intermédiaire de l'interposition d'une pièce d'insertion correspondante (127).

11. Procédé selon la revendication 9 dans lequel après obtention desdits canaux (3), lesdits disques (101, 101') sont soumis à une étape de déformation pour obtenir un profil ondulé.

12. Procédé selon la revendication 9 dans lequel ladite étape de déformation est obtenue par l'intermédiaire d'un processus de formage de profilés ou d'un processus de formage dans une matrice en pot.

13. Procédé selon l'une quelconque des revendications précédentes dans lequel lesdits canaux (3) sont obtenus par déformation mécanique, technologie laser, corrosion chimique, dépôt de matériau ou application de pièces d'écartement sur la surface de ladite tôle.

14. Procédé selon l'une quelconque des revendications précédentes dans lequel lesdits canaux présentent des configurations de section transversale semi-circulaire, rectangulaire ou triangulaire.

15. Procédé selon l'une quelconque des revendications précédentes dans lequel ledit volume (23) est amené à une pression supérieure/inférieure à la pression extérieure au moyen d'un dispositif de compression/aspiration (35).

16. Joint multicouches comprenant au moins une première couche et une seconde couche superposées, en contact mutuel étroit et fermé hermétiquement le long des bords (5, 5', 6, 6', 106) de façon à définir entre lesdites couches (1, 1', 101, 101') un volume correspondant (23), lequel est isolé hermétiquement de l'environnement voisin et dans lequel la pression est établie à une valeur préétablie, **caractérisé en ce qu'**au moins une face desdites couches (1, 1', 101, 101') faisant face audit volume (23) est dotée d'au moins un canal (3).

17. Joint selon la revendication 16, dans lequel ledit joint comprend un détecteur de pression (31, 131) connecté avec ledit volume (23).

18. Joint selon la revendication 16, dans lequel une pluralité de canaux (3), disposés parallèlement l'un à l'autre ou en serpentin ou en grille ou radialement, est obtenue sur au moins une face d'au moins l'une desdites couches (A).

19. Joint selon la revendication 16, dans lequel lesdites couches sont des corps cylindriques creux (1, 1') de tôle métallique.

20. Joint selon la revendication 19, dans lequel lesdits corps cylindriques creux (1, 1') sont fermés hermétiquement le long de leurs bords (5, 5', 6, 6') par soudure par l'intermédiaire de l'interposition d'une première pièce et d'une seconde pièce d'insertion correspondantes (7, 9).

21. Joint selon la revendication 20, dans lequel ladite première pièce d'insertion est un anneau métallique (7), ledit cylindre intérieur (1, 1') et ledit cylindre extérieur (1, 1') étant soudés, respectivement, à la paroi intérieure et au bord inférieur dudit anneau métallique (7).

22. Joint selon la revendication 20, dans lequel ladite seconde pièce d'insertion est un couvercle métallique (9), ledit cylindre intérieur (1, 1') et ledit cylindre extérieur (1, 1') étant soudés au bord latéral dudit couvercle métallique (9).

23. Joint selon la revendication 16, dans lequel lesdites couches sont des éléments de tôle métallique configurés en disque (101, 101').

24. Joint selon la revendication 23, dans lequel lesdits disques (101, 101') sont fermés hermétiquement le long de leurs bords par soudure par l'intermédiaire de l'interposition d'une pièce d'insertion métallique correspondante configurée en anneau (7, 9).

25. Joint selon la revendication 21 ou 24, dans lequel ledit anneau (7, 107) présente, sur sa paroi interne, une gorge annulaire (21, 121) communiquant avec ledit canal (lesdits canaux) (3).

26. Joint selon la revendication 25, dans lequel ladite gorge annulaire (7, 107) communique avec l'extérieur par un trou radial (27, 127) formé dans ledit anneau (7, 107).

27. Joint selon la revendication 26, dans lequel ledit trou radial (27, 127) est connecté, à l'extérieur dudit anneau (7, 107), avec un capteur de pression (31, 131) à travers un capillaire (29, 129).

28. Joint selon l'une quelconque des revendications 16 à 27, dans lequel ledit volume (23) est amené à une pression supérieure/inférieure à la pression externe.

29. Joint selon l'une quelconque des revendications 16 à 28, dans lequel au moins une couche libre (1") est fournie dans ledit volume (23).

30. Vanne destinée à des fluides, **caractérisée en ce qu'**elle comporte un joint multicouches selon l'une quelconque des revendications 16 à 22 ou 25 à 29.
